# EUROPEAN PATENT APPLICATION

(11) **EP 3 306 131 A1**
(43) Date of publication of application: **11.04.2018**
(21) Application number: 16799831.9
(22) Date of filing: 12.05.2016
(51) Int. Cl.: F16F 9/14, E05F 3/14

(54) **ROTARY DAMPER**

(30) Priority: 25.05.2015 JP 2015105294
(71) Applicant: TOK INC., Tokyo 1748501 (JP)
(72) Inventor: ORITA, Nobutoshi, Tokyo 174-8501 (JP)
(74) Representative: Tetzner, Michael
(86) International application number: PCT/JP2016/064198
(87) International publication number: WO 2016/190123

(57) **Abstract**

Provided is a rotary damper that suppresses frictional resistance generated between an elastic member and a member abutting thereagainst particularly during low-torque operation. The rotary damper (10) is provided with a shaft (12) attached rotatably with respect to a housing (11); a first torque generation member (13) attached to the housing (11) and provided with a first torque generation surface (24a) that spreads in an axial direction of the shaft (12); a second torque generation member (14) that integrally rotates with the shaft (12) and is provided with a second torque generation surface (28a) capable of facing the first torque generation surface (24a); a compression coil spring (15) interposed between the first torque generation member (13) and the second torque generation member (14); an adjuster (16) that adjusts, in the axial direction of the shaft (12), a position of the second torque generation member (14) with respect to the first torque generation member (13); and a frictional resistance suppressing mechanism (17) disposed between the first torque generation member (13) and the second torque generation member (14), inside the housing (11) filled with a viscous fluid.

## Description

### Technical Field

The present invention relates to a rotary damper that is used for a hanging door, a sliding door, a rolling screen, a manual shutter, or the like.

### Background Art

In the related art, a rotary damper in which a viscous fluid is enclosed within a housing, a rotating member and a stationary member are disposed in close proximity to face each other inside the housing, and a braking force is automatically applied to the rotating member according to the rotating speed thereof using the shear resistance of the viscous fluid interposed between both the members during the rotation of the rotating member is known well (for example, refer to PTL 1).

In the structure of the rotary damper described in PTL 1, a compression coil spring is used as an elastic member that constitutes a torque automatic adjustment mechanism, an end surface of the fixing member is in contact with the compression coil spring, and the other end surface is disposed in contact with the rotating member.

### Citation List

### Patent Literature

[PTL 1] Japanese Unexamined Patent Application Publication No. 2013-50117

### Summary of Invention

### Technical Problem

However, as in the rotary damper described in PTL 1, in the structure in which one end surface of the compression coil spring that constitutes the torque automatic adjustment mechanism is in contact with the fixing member and the other end surface is in contact with the rotating member, if the rotary damper operates, the fixing member and a contact surface of the compression coil spring rub against each other and the compression coil spring and a contact surface of the rotating member rub against each other, and large sliding friction is generated therebetween. This sliding friction becomes frictional resistance (also referred to as "sliding resistance") during damper rotation. This frictional resistance is tolerated by the damper torque when the rotating speed increases and the torque of the rotary damper becomes large, there is no hindrance in operation. However, there is a problem that the operation is hindered by the frictional resistance in a case where it is desired to perform the operation with small damper torque.

Thus, in a rotary damper in which the magnitude of damper torque varies automatically in accordance with the rotating speed of a rotating member, there occurs a technical problem to be solved in order to provide a configuration in which operation is not hindered by suppressing frictional resistance generated between an elastic member and a member abutting therewith particularly during low-torque operation. An object of the invention is to solve this problem.

### Solution to Problem

The invention is suggested in order to achieve the above object, and the invention of Claim 1 provides a rotary damper in which a magnitude of damper torque varies automatically in accordance with a rotating speed of a rotating member. The rotary damper includes, inside a housing with a viscous fluid, a shaft attached rotatably with respect to the housing such that one end thereof is made to protrude to an outside of the housing; a first torque generation member that is provided with a first torque generation surface which spreads in an axial direction of the shaft and is attached to the housing; a second torque generation member that is provided with a second torque generation surface capable of facing the first torque generation surface and integrally rotates with the shaft; an elastic member interposed between the first torque generation member and the second torque generation member; an adjuster that adjusts, in the axial direction of the shaft, a position of the second torque generation member with respect to the first torque generation member; and a frictional resistance suppressing mechanism disposed between the first torque generation member and the second torque generation member to suppress frictional resistance with the elastic member.

According to this configuration, the frictional resistance (sliding resistance) generated among the first torque generation member, the second torque generation member, and an elastic member can be eliminated by the frictional resistance suppressing mechanism. Also, by eliminating the frictional resistance generated between the elastic member and the member abutting thereagainst, the rotary damper can be smoothly operated over a wide range from low-torque operation to high-torque operation.

The invention according to Claim 2 provides the rotary damper, in the configuration according to Claim 1, in which the frictional resistance suppressing mechanism includes at least a first resistance suppressing body and a second resistance suppressing body.

According to this configuration, by dividing the frictional resistance suppressing mechanism into two members of the first resistance suppressing body and the second resistance suppressing body, for example, one end surface of the elastic member can be used as the second resistance suppressing body, therefor the number of parts can be reduced.

The invention according to Claim 3 provides the rotary damper, in the configuration according to Claim 2, in which the second resistance suppressing body abuts against the first resistance suppressing body and separates from the first torque generation member during low-load setting of the rotary damper, performed by the adjuster, and separates from the first resistance suppressing body and abuts against the first torque generation member during high-load setting thereof.

According to this configuration, the position where the second resistance suppressing body abuts against a peripheral member varies in accordance with load setting. That is, during low-load setting (during low-torque operation), the second resistance suppressing body is crimped to the first resistance suppressing body by the biasing force of the elastic member, and the abutment thereof against the first torque generation member that is a fixing member is released. Then, if the shaft rotates, the second torque generation member, the elastic body, and the second resistance suppressing body also rotate in the same direction. For this reason, there is no unnecessary frictional resistance (sliding resistance) generated between the elastic member and the first torque generation member, and there is no case where the frictional resistance hinders torque operation. On the contrary, during the high-load setting, the second resistance suppressing body is crimped to the first torque generation member due to the biasing force of the elastic member, and thus preliminary compression becomes strong. As a result, the sliding resistance is generated between the second resistance suppressing body and the first torque generation member. Then, if the shaft rotates, the second torque generation member also rotates in the same direction. However, the second resistance suppressing body does not rotate in synchronization with the rotation of the shaft due to the sliding resistance (sliding frictional force) between the second resistance suppressing body and the first torque generation member.

The invention according to Claim 4 provides the rotary damper, in the configuration according to Claim 2 or 3, in which the second resistance suppressing body includes a first abutment part against which the elastic member abuts, a second abutment part against which the first resistance suppressing body abuts, and a third abutment part against which the first torque generation member abuts, and always preliminarily compresses the elastic member.

According to this configuration, the elastic member can be always preliminarily compressed by providing the second resistance suppressing body with the three abutment parts. Accordingly, in a case where the first torque generation member is set to a high-load side, the preliminary compression also becomes strong and the speed dependability of the rotary damper is maintained.

### Advantageous Effects of Invention

According to the rotary damper of the invention, unnecessary frictional resistance (sliding resistance) generated during the low-torque operation can be suppressed (eliminated), and the operation of the rotary damper can be smoothly performed. On the contrary, during the high-torque operation, the preliminary compression of the elastic member can be strengthened, speed dependability can be enhanced, and the effect of the rotary damper can be reliably maintained. According to this configuration, the frictional resistance suppressing mechanism is divided into two members of the first resistance suppressing body and the second resistance suppressing body. Thus, in a case where one end surface of the elastic member can be used as the second resistance suppressing body, the number of parts can be reduced. As a result, cost reduction can be achieved.

### Brief Description of Drawings

Fig. 1 is a longitudinal sectional view of a rotary damper related to the invention illustrated in a state of low-load setting, and (a) is an overall view of the rotary damper and (b) is an enlarged view of portion A in (a) .
Fig. 2 is a longitudinal sectional view of the same rotary damper as the above illustrated in a state of low-load setting and high-speed rotation.
Fig. 3 is a longitudinal sectional view of the same rotary damper as the above illustrated in a state of high-load setting, and (a) is an overall view of the rotary damper and (b) is an enlarged view of portion B in (a) .
Fig. 4 is an exploded perspective view of the same rotary damper as the above.
Fig. 5 is a partially enlarged perspective view for explaining the structure and operation of main parts of the same rotary damper as the above.
Fig. 6 is a schematic view for explaining the structure and operation of the main parts of the same rotary damper as the above.
Fig. 7 is a schematic view for explaining the structure and operation of the main parts of the same rotary damper as the above.

### Description of Embodiments

In a rotary damper in which the magnitude of damper torque varies automatically in accordance with the rotating speed of a rotating member, particularly in a rotary damper in which the magnitude of the damper torque varies in accordance with the rotating speed of the rotating member in order to achieve an object of providing a rotary damper that suppresses the frictional resistance generated between an elastic member and a member abutting there against during low-torque operation so as not to hinder the operation, the invention has been realized by providing a shaft attached inside and rotatably with respect to a housing filled with a viscous fluid such that one end thereof is made to protrude to the outside of the housing; a first torque generation member attached to the housing and provided with a first torque generation surface that spreads in an axial direction of the shaft; a second torque generation member that integrally rotates with the shaft and is provided with a second torque generation surface capable of facing the first torque generation surface; an elastic member interposed between the first torque generation member and the second torque generation member; an adjuster that adjusts, in the axial direction of the shaft, a position of the second torque generation member with respect to the first torque generation member; and frictional resistance suppressing mechanism disposed between the first torque generation member and the second torque generation member to suppress frictional resistance with the elastic member.

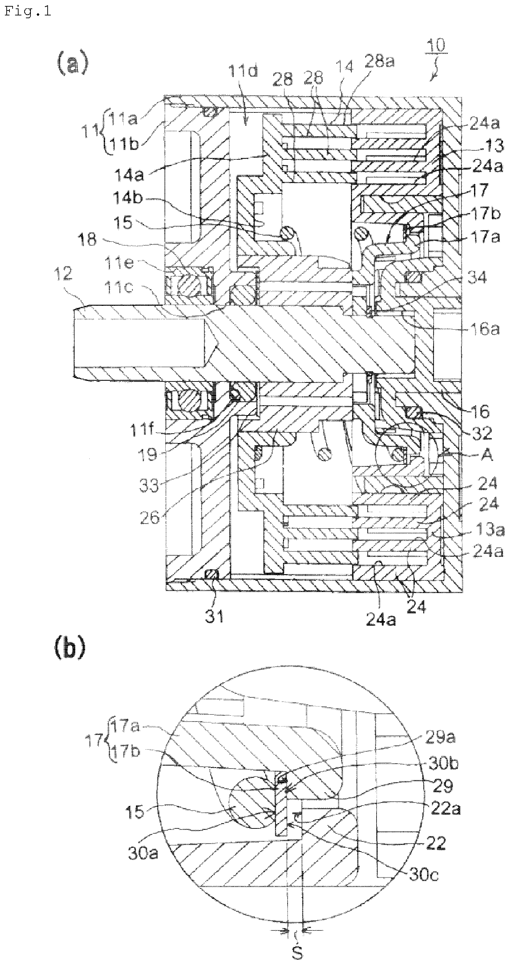

Hereinafter, a rotary damper according to an embodiment of the invention will be described in detail by way of preferred examples, referring to Figs. 1 to 7.

### Examples

Figs. 1 to 4 illustrate a schematic overall structure of the rotary damper related to the invention. In these drawings, a rotary damper 10 is a rotary damper that has a structure in which the magnitude of damper torque varies automatically in accordance with the rotating speed of a shaft 12, and is mainly composed of a housing 11, and the shaft 12, a first torque generation member 13, a second torque generation member 14, a compression coil spring 15 serving as an elastic member, an adjuster 16, a frictional resistance suppressing mechanism 17, and the like that are provided inside the housing 11. The rotary damper 10 in the present example has the housing 11 attached to a fixed side thereof and has the shaft 12 attached to a hanging door or the like as a rotational side thereof.

The housing 11 is composed of a cylindrical housing body 11a, and a cap 11b that closes an open end of the housing body 11a. Although the housing body 11a and the cap 11b are both molded as an integrally-molded article from a suitable synthetic resin material, the housing body 11a and the cap 11b may be made of a metallic material or the like. Additionally, the inside of a chamber 11d formed by the housing body 11a and the cap 11b is filled with a viscous fluid.

The shaft 12 is formed of a synthetic resin material or a metallic material. The shaft 12 has one end rotatably supported by a bearing part 16a of the columnar adjuster 16 and mounted on a closed end of the housing body 11a so as not to move in an axial direction and so as to be rotatable at a fixed position. The other end of the shaft 12 passes through a central hole 11c formed in the cap 11b of the housing 11 and protrudes to the outside of the housing 11. In addition, a recess 11e is formed on an outer surface side of the center of the cap 11b, a ball bearing 18 is attached to the recess 11e, and an intermediate part of the shaft 12 is rotatably supported by the ball bearing 18.

Additionally, a recess 11f is formed on an inner surface side of the center of the cap 11b, and an O-ring seal 19 is provided within the recess 11f so as to surround the shaft 12. Leakage of the viscous fluid from the cap 11b along the shaft 12 is prevented by the O-ring seal 19.

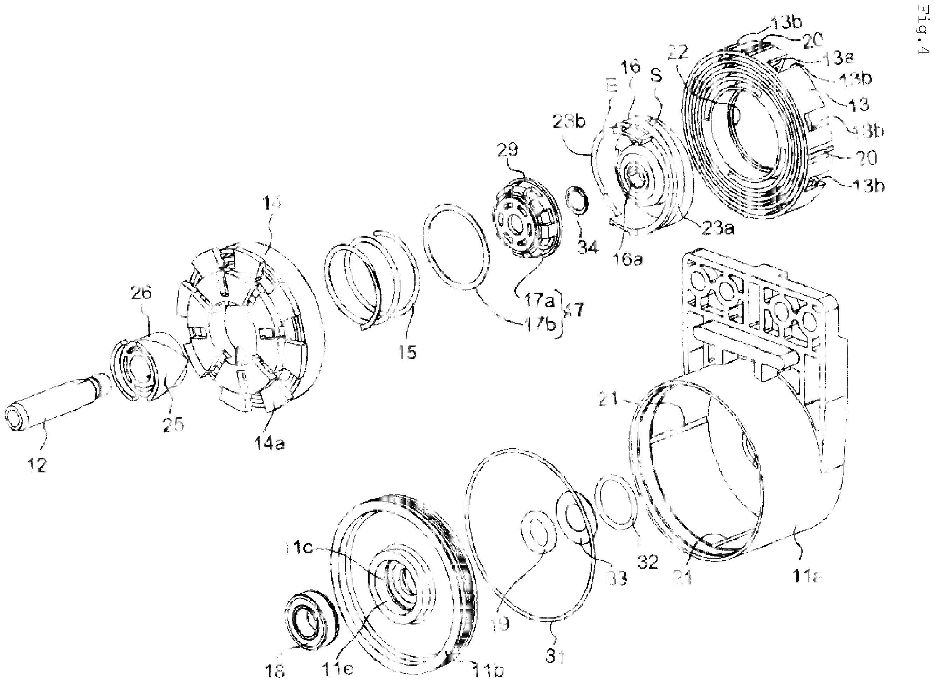

Moreover, the first torque generation member 13 is disposed within the housing 11 on the closed end side of the housing body 11a. As illustrated in Fig. 4, a key 20 is formed in the axial direction on an outer peripheral surface of the first torque generation member 13. Meanwhile, similarly, as illustrated in Fig. 4, a key groove 21 is formed in the axial direction in correspondence with the key 20 at an internal diameter part of the housing body 11a, and the key 20 is slidably fitted to the key groove 21. Accordingly, the first torque generation member 13 is freely slidable in the axial direction with respect to the housing body 11a.

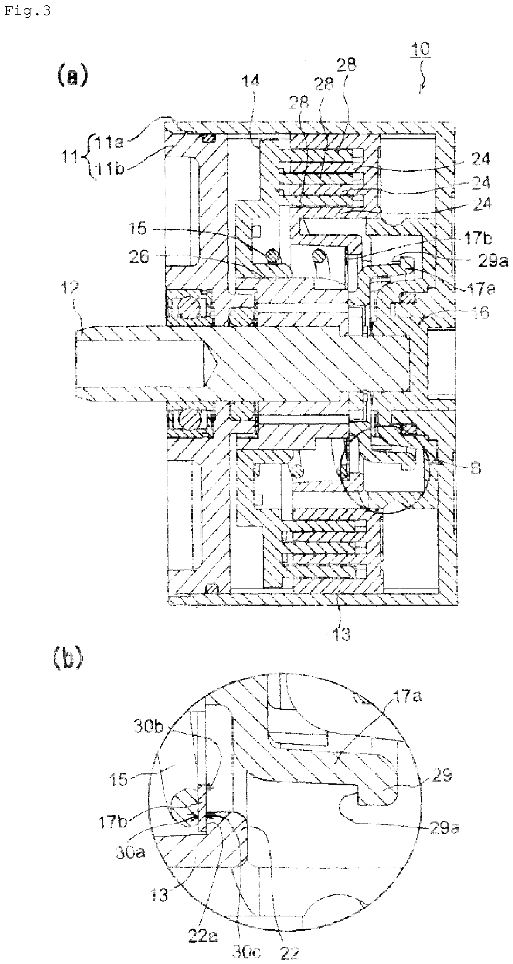

Additionally, as illustrated in Fig. 4, a collar-shaped part 22, which horizontally extends toward a center side from the internal diameter part side, is integrally formed over the entire circumference of the internal diameter part at one end of the internal diameter part of the first torque generation member 13 which faces the closed end side of the housing body 11a. As illustrated in Fig. 1(b) and Fig. 3(b), a receiving surface 22a capable of abutting against a third abutment part 30c of a second resistance suppressing body 17b to be described below is formed on the surface of the collar-shaped part 22 which faces the second torque generating member 14.

Additionally, two engaging projections (not illustrated) formed in the first torque generation member 13 respectively abut against two cams 23a and 23b formed on an outer peripheral part of the adjuster 16 in correspondence with the two cams 23a and 23b. The cams 23a and 23b are formed in the same shape, and respectively have inclined surfaces for moving the first torque generation member 13 in the axial direction. The respective engaging projections of the first torque generation member 13 respectively abut against start points S of cam surfaces of the corresponding cams 23a and 23b due to the spring pressure of the compression coil spring 15 in their initial states.

In each of the two cams 23a and 23b of the adjuster 16, a rearmost side (the closed end side of the housing body 11a) of the adjuster 16 in the axial direction is used as the start point S, a forefront side (the cap 11b side) is used as an end point E, and the inclined surface is formed on a line connecting the start point and the end point together along an outer peripheral surface of the adjuster 16. The positions of abutment between the engaging projections and the cams 23a and 23b can be changed between the start points S and the end points E by rotating the adjuster 16.

As illustrated in Figs. 1 to 4, a plurality of rows of (four in the present example) annular projection plates 24 are concentrically formed along an inner circumferential direction of the housing body 11a, at a disc-shaped part 13a of the first torque generation member 13. As illustrated in Fig. 4, each projection plate 24 is formed with cutout parts 13b, and is formed to annularly spread in the axial direction and in a radial direction of the shaft 12.

The projection plates 24 are disposed at substantially equal intervals in the radial direction of the shaft 12, and a surface of each projection plate 24 functions as a first torque generation surface 24a as will be described below. In addition, although a configuration in which the plurality of rows of projection plates 24 are concentrically provided has been described, a single row of projection plate may be provided. Additionally, the projection plates 24 may not be annular, but may be a semi-annular shape. In addition, the projection plates 24 may have any shape as long as the projection plates have shapes that spread in the axial direction of the shaft 12 and in a circumferential direction centering on a central axis of the shaft 12.

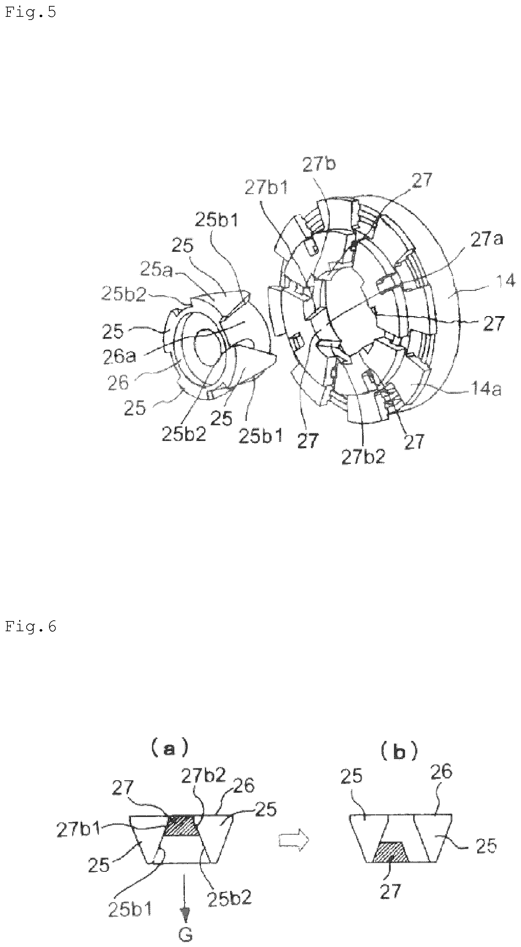

As illustrated in Figs. 4 and 5, a pipe body 26 having a plurality of cams 25 formed at an outer periphery thereof is attached to the shaft 12 as illustrated in Figs. 1 to 3. At least one protruding strip (not illustrated), that is, a key, is formed in the axial direction of the shaft 12 on an inner surface side of the pipe body 26. This key is engaged with a key groove (not illustrated) formed in the shaft 12, and thereby the pipe body 26 rotates integrally with the shaft 12.

As illustrated in Fig. 5, the plurality of cams 25 formed at the outer peripheral part of the pipe body 26 are equally spaced from each other. In addition, the number of cams 25 may be arbitrary as long as one or more cams 25 are provided. Each cam 25 is located at a peripheral surface part 25a of the external diameter of a substantially isosceles triangle and both side parts of the peripheral surface part 25a, and thus a first cam surface 25b1 and a second cam surface 25b2 having a predetermined width in the radial direction of the pipe body 26 are formed.

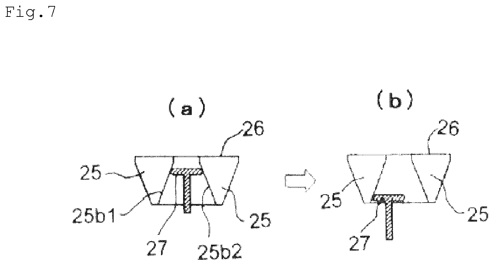

As illustrated in Figs. 6 and 7, the cam 25 is configured such that the pressure against an engaging body 27 of the second torque generation member 14 (to be described below) to be engaged with the cam surface 25b1 and 25b2 of the cam 25 by the rotary torque of the shaft 12 is converted into forces in two directions of a rotational direction of the shaft 12 and a thrust direction that is in the axial direction of the shaft 12 due to the inclination of cam surfaces 25b1 and 25b2. The cam surfaces 25b1 and 25b2 of each cam 25 constitute guide surfaces that has an angle with respect to the axial direction, and that presses the engaging body 27 in the rotational direction and slidably guides the engaging body 27 in the thrust direction.

Additionally, a pair of the cams 25 adjacent to each other are formed such that the first cam surface 25b1 of one cam 25 and the second cam surface 25b2 of the facing other cam 25 are provided with a predetermined spacing therebetween as illustrated in Figs. 5 to 7. Moreover, the first cam surface 25b1 and the second cam surface 25b2 are formed with angles in the axial direction on the outer peripheral surface of the pipe body 26 over its substantially entire length, and the first and second cam surfaces 25b1 and 25b2 are inclined such that the facing spacing therebetween widens in the axial direction.

The inclination of the first cam surface 25b1 applies a rotative force in one direction and a force in the thrust direction G (refer to Fig. 6) to the engaging body 27 in contact therewith. Additionally, the inclination of the second cam surface 25b2 applies a rotative force in the other direction and the force in the thrust direction G to the engaging body 27 in contact therewith. The engaging body 27, which is disposed in pressure contact due to an elastic force of the compression coil spring 15 between the first and the second cam surfaces 25b1 and 25b2 in the two cams 25, is formed in a wedge shape at the internal diameter part of the second torque generation member 14.

The engaging bodies 27 are provided by the same number as the number of cams 25 in correspondence with the number of cams 25, and as illustrated in Fig. 6, a first cam receiving surface 27b1 and a second cam receiving surface 27b2 are respectively formed at both side parts of each engaging body 27. The peripheral surface parts 25a of the respective cams 25 are formed on the same circumferential surface, and as illustrated in Fig. 5, peripheral surface parts 27a of the respective engaging bodies 27 are also formed on the same circumferential surface. In a state where the second torque generation member 14 is fitted to the pipe body 26, as illustrated in Fig. 6(a), each engaging body 27 is disposed as illustrated in Fig. 6(a) between a pair of corresponding cams 25 in a state where the first cam receiving surface 27b1 faces the first cam surface 25b1 in surface contact therewith and the second cam receiving surface 27b2 faces the second cam surface 25b2 in surface contact therewith. Additionally, in that state, the peripheral surface part 25a of each cam 25 comes in surface contact with an inner peripheral surface 27b of the second torque generation member 14 formed between the engaging bodies 27, and the fan-shaped peripheral surface part 27a of each engaging body 27 comes in surface contact with an outer peripheral surface 26a of the pipe body 26 between the respective cams 25.

In a state where the shaft 12 has stopped, as illustrated in Fig. 6(a), the engaging body 27 is located at a back end in a narrow direction between the first and second cam surfaces 25b1 and 25b2 due to the spring force of the compression coil spring 15. Then, in that state, the first cam receiving surface 27b1 of one side part of the engaging body 27 abuts against the corresponding first cam surface 25b1, and the second cam receiving surface 27b2 of the other side part abuts against the corresponding second cam surface 25b2. Additionally, if the pipe body 26 rotates in one direction, this rotation is transmitted to the first cam receiving surface 27b1 of the engaging body 27 via the first cam surface 25b1, and as illustrated in Fig. 6(b), the engaging body 27 moves in the thrust direction G along the cam surface 25b1 in accordance with the rotating speed. On the contrary, if the pipe body 26 rotates in the other direction, this rotation is transmitted to the second cam receiving surface 27b2 of the engaging body 27 via the second cam surface 25b2, and moves in the thrust direction G along the second cam surface 25b2 in accordance with the rotating speed.

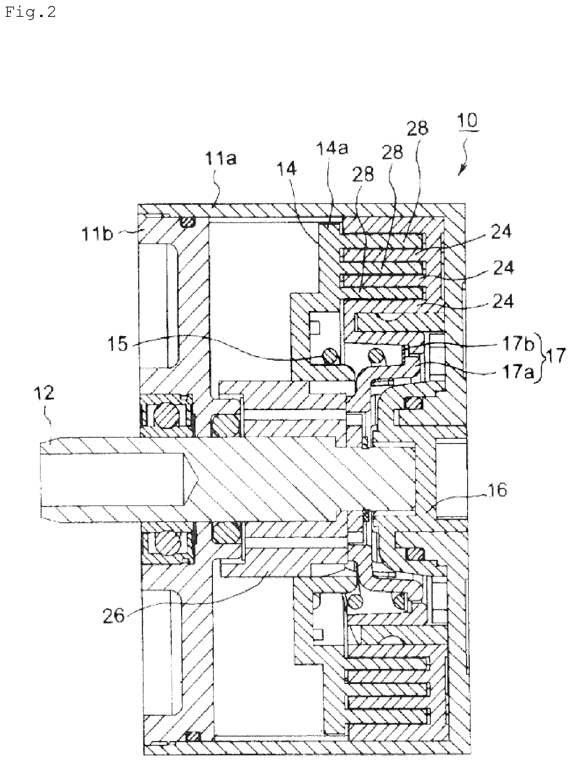

The second torque generation member 14 is molded using a synthetic resin material, and is mounted on the pipe body 26 so as to rotate together with the shaft 12 via the cams 25. The second torque generation member 14 is movable along the outer peripheral surface of the pipe body 26 between a leftmost position illustrated in Fig. 1(a) and a rightmost position illustrated in Fig. 2. In the present example, the second torque generation member 14 can be defined as a movable member that is movable in a central axis direction of the shaft 12.

Three annular projection plates 28 are concentrically disposed in the axial direction toward the inner surface side of the closed end of the housing body 11a and in the circumferential direction centering on the central axis of the shaft 12, at a disc-shaped part 14a of the second torque generation member 14. A plurality of rows of the projection plates 28 are concentrically disposed at equal intervals, similar to the projection plates 24 of the first torque generation member 13. The surface of each projection plate 28 has a shape that spreads in the axial direction and in the circumferential direction of the shaft 12, and a surface of each projection plate 28 functions as a second torque generation surface 28a as will be described below. In addition, the projection plates 28 may not be annular, but may be a semi-annular shape. In addition, the projection plates 28 may have any shape as long as the projection plates have shapes that spread in the axial direction of the shaft 12 and in the circumferential direction centering on the central axis of the shaft 12.

Then, when the second torque generation member 14 is moved in the thrust direction toward the first torque generation member 13, as illustrated in Fig. 2, the projection plates 24 of the first torque generation member 13 and the projection plates 28 of the second torque generation member 14 are disposed to face each other and engaged with each other. That is, the thickness of the projection plates 28 of the second torque generation member 14 is substantially the same as the thickness of the projection plates 24 of the first torque generation member 13, and the arrangement pitch of the projection plates 28 of the second torque generation member 14 is shifted to the outside by half-pitch with respect to the arrangement pitch of the projection plates 24 of the first torque generation member 13. For this reason, an engaged state as illustrated in Fig. 2 is obtained. In addition, although a configuration in which the plurality of rows of projection plates 28 are concentrically provided has been described, a single row of projection plate may be provided.

Additionally, a spring receiving recess 14b is provided in a facing portion of the second torque generation member 14 that faces the adjuster 16. Moreover, the frictional resistance suppressing mechanism 17 is provided in a portion where the second torque generation member 14 and the adjuster 16 face each other. Elastic means, that is, a compression coil spring 15 is disposed in a compressed state via the frictional resistance suppressing mechanism 17 between the second torque generation member 14 and the first torque generation member 13. The compression coil spring 15 functions to elastically pull the second torque generation member 14 apart from the first torque generation member 13. For this reason, the second torque generation member 14 is normally fastened elastically at the leftmost position illustrated in Fig. 1.

The frictional resistance suppressing mechanism 17 is composed of a first resistance suppressing body 17a and the second resistance suppressing body 17b that are attached to the shaft 12 so as to be rotatable integrally therewith.

The first resistance suppressing body 17a is attached to the shaft 12 so as to be integrally rotatable therewith at a fixed position on the shaft 12 between the adjuster 16 and the pipe body 26. In the first resistance suppressing body 17a, as illustrated in Fig.1(a) and Fig.1(b), a collar-shaped part 29, which horizontally extends toward the collar-shaped part 22 side, is formed in correspondence with the collar-shaped part 22 of the first torque generation member 13. A receiving surface 29a capable of abutting against a second abutment part 30b of the second resistance suppressing body 17b with the biasing force of the compression coil spring 15 is formed in the collar-shaped part 29. In addition, the position of the receiving surface 29a is set so as to be disposed in a state where this position is shifted by a distance S further to the second torque generation member 14 side than the receiving surface 22a of the first torque generation member 13 as illustrated in Fig.1(a) and Fig.1(b), when the first torque generation member 13 is moved to the rightmost position illustrated in Fig. 1(a).

The second resistance suppressing body 17b is formed as a ring-shaped plate using a synthetic resin material or a metallic material, and is disposed so as to be movable in the axial direction within a gap between an outer periphery of the first resistance suppressing body 17a and an inner periphery of the first torque generation member 13. The second resistance suppressing body 17b is provided with a first abutment part 30a, the other end of the compression coil spring 15 abuts against the first abutment part 30a, and the second resistance suppressing body 17b is always biased to the first torque generation member 13 side.

In addition, in the drawing, reference signs 31 and 32 represent a seal member, reference sign 33 represents a washer, and reference sign 34 represents a snap ring.

Next, the operation of the rotary damper 10 in the present example will be described.

(In a case where first torque generation member 13 is set to low-load side):
The state illustrated in Fig. 1(a) and Fig. 2 is a case where the first torque generation member 13 is disposed at the rightmost position, that is, is set to a low-load position. In this setting to the low-load side, due to the elastic force of the compression coil spring 15, the second abutment part 30b of the second resistance suppressing body 17b of the frictional resistance suppressing mechanism 17 abuts against the receiving surface 29a of the first resistance suppressing body 17a, forms the distance (gap) S together with the receiving surfaces 22a of the first torque generation member 13 as illustrated in Fig. 1(b), and is brought into non-abutment with the first torque generation member 13.

Then, when the shaft 12 of the rotary damper 10 is brought into a non-rotation state, as illustrated in Fig. 1, the second torque generation member 14 is pulled away from the first torque generation member 13 due to the elastic force of the compression coil spring 15, and the first cam receiving surface 27b1 and the second cam receiving surface 27b2 of both side surfaces of each engaging body 27 are brought into close contact with the first cam surface 25b1 and the second cam 25b2 in portions where the facing spacing are the narrowest. In this case, the facing area between the first torque generation surface 24a of the projection plate 24 of the first torque generation member 13 and the second torque generation surface 28a of the projection plate 28 of the second torque generation member 14 is substantially zero or nearly zero.

If the shaft 12 is rotated in one rotational direction, the compression coil spring 15 abuts between the second torque generation member 14 and the first abutment part 30a of the second resistance suppressing body 17b therebetween. Additionally, since the second abutment part 30b of the second resistance suppressing body 17b abuts against the receiving surface 29a of the first resistance suppressing body 17a, the second torque generation member 14, the cams 25, the first resistance suppressing body 17a, the second resistance suppressing body 17b, and the compression coil spring 15 rotate in the same direction. In this rotation, the compression coil spring 15 rotates in the same direction together with the second torque generation member 14 and the second resistance suppressing body 17b, and sliding resistance is not generated at abutment points on both end sides of the compression coil spring 15.

Additionally, when the rotating speed is extremely low, there is almost no force in the thrust direction generated on the engaging body 27 by the inclined surfaces of the cam surface 25b1 and 25b2. Therefore, the rotation is made in a state where the facing area between the torque generation surface 24a of the projection plate 24 of the first torque generation member 13 and the torque generation surface 28a of the projection plate 28 of the second torque generation member 14 is substantially zero or nearly zero.

Moreover, if the shaft 12 is rotated in the one direction and the rotating speed thereof becomes gradually faster, the force in the thrust direction received from the cam surface 25b1 of the engaging body 27 increases. Then, the engaging body 27 is pressed by the first cam surface 25b1 against the elastic force of the compression coil spring 15 and is moved in the thrust direction G while rotating in an interlocking manner with the rotation of the cams 25.

In this case, the second torque generation member 14 is moved to the first torque generation member 13 side while rotating, and the first torque generation surface 24a of the projection plate 24 of the first torque generation member 13 and the second torque generation surface 28a of the projection plate 28 of the second torque generation member 14 face each other. As a result, torque is generated due to the shear resistance of the viscous fluid between the torque generation surfaces 24a and 28a, and a braking force is applied to the shaft 12. Then, as the rotating speed of the shaft 12 becomes larger, the engaging body 27 receives the force in the thrust direction G that becomes gradually larger, and the movement distance of the second torque generation member 14 toward the first torque generation member 13 also becomes large. Additionally, the facing area between the first torque generation surface 24a of the projection plate 24 of the first torque generation member 13 and the second torque generation surface 28a of the projection plate 28 of the second torque generation member 14 also increases gradually, and the torque generated between the torque generation surfaces 24a and 28a, that is, the braking force applied to the shaft 12, increases.

If the rotating speed of the shaft 12 reaches an upper limit speed, as illustrated in Fig. 2, the above-described facing area becomes the maximum, and the torque generated between the facing area, that is, the braking force applied to the shaft 12, becomes the maximum. Since the cam surfaces 25b1 and 25b2 of the cam 25 are formed as the inclined surfaces, a change in the facing area between the torque generation surface 24a of the projection plate 24 of the first torque generation member 13 and the torque generation surface 28a of the projection plate 28 of the second torque generation member 14 is proportional to the rotating speed of the shaft 12. Therefore, the torque generated between the torque generation surfaces, that is, the braking force applied to the shaft 12, is proportional to the rotating speed of the shaft 12.

In this way, for example, supposing a case where the rotary damper 10 is assembled into a hanging door (the shaft 12 is coupled to a rotating shaft of the hanging door, and the housing 11 is anchored to a wall or the like adjacent to the hanging door), and an open hanging door is moved to a closed position due to gravity, the hanging door is accelerated due to gravity acceleration. However, since the braking force applied to the shaft 12 is proportional to the rotating speed of the shaft 12, the hanging door moves to the closed position at a constant speed. Additionally, when the device of the above embodiment related to this invention is used for a sliding door or the like and when the sliding door is moved in an opening/closing direction with a normal light force, the sliding door can be lightly moved with a small force. On the contrary, in a case where the sliding door is moved in the opening/closing direction with a large force, a large braking force is applied, and the sliding door does not hit an opening/closing terminal part strongly. That is, the opening/closing operation of the sliding door is always performed at a constant movement speed irrespective of the magnitude of the force applied for the opening and closing of the sliding door.

(In a case where first torque generation member 13 is set to high-load side):
Next, a case where the adjuster 16 is rotationally operated and the first torque generation member 13 is disposed at an intermediate position, that is, is set to a high-load position as illustrated in Fig. 3(a) will be described. In a case where setting to the high-load position is made, as illustrated in Fig. 3(b), the receiving surface 22a of the collar-shaped part 22 of the first torque generation member 13 moves further to the second torque generation member 14 side than the first resistance suppressing body 17a of the frictional resistance suppressing mechanism 17. Then, one end surface of the compression coil spring 15 abuts against the second torque generation member 14, and the other end surface is brought into abutment with the receiving surface 22a of the first torque generation member 13 via the second resistance suppressing body 17b. Then, the second abutment part 30b of the second resistance suppressing body 17b and the receiving surface 29a of the first resistance suppressing body 17a are separated from each other.

If the shaft 12 rotates in this state, the cams 25 fixed to the shaft 12, and the first resistance suppressing body 17a also rotate in the same direction, in a state where the torque generation surface 24a of the projection plate 24 of the first torque generation member 13 and the torque generation surface 28a of the projection plate 28 of the second torque generation member 14 face mutually. Here, the torque generated between the torque generation surfaces, that is, the braking force applied to the shaft 12, is also large, and rotation is made with a high load applied. Meanwhile, since the second resistance suppressing body 17b is crimped to the receiving surface 22a of the first torque generation member 13, which is a fixing member, with the elastic force of the compression coil spring 15, the second resistance suppressing body 17b does not rotate in synchronization with the rotation of the shaft 12.

Then, in this way, one end surface of the compression coil spring 15 abuts against the second torque generation member 14 that is a rotating member, the other end surface abuts against the receiving surface 22a of the first torque generation member 13, which is a fixing member, via the second resistance suppressing body 17b, and sliding resistance is generated at the abutment points of the compression coil spring 15. In addition, since the sliding resistance is a small force compared to the damper torque, in a case where setting to high torque is made, the sliding resistance is tolerated by the damper torque and does not hinder the operation of the rotary damper.

In addition, in a case where the adjuster 16 is adjusted to set the first torque generation member 13 to a substantially intermediate position between low load and high load, the second resistance suppressing body 17b is set such that the elastic member is always preliminarily compressed so as to abut against any one of the first resistance suppressing body 17a and the first torque generation member 13.

As apparent from the above description, in the rotary damper 10 of the present example, the frictional resistance suppressing mechanism 17 having the first resistance suppressing body 17a and the second resistance suppressing body 17b is provided among the first torque generation member 13, the second torque generation member 14 and the compression coil spring (elastic member) 15 such that the frictional resistance (sliding resistance) generated among the first torque generation member 13, the second torque generation member 14, and the compression coil spring 15 is eliminated (suppressed) by the frictional resistance suppressing mechanism 17 during a low-torque operation. For that reason, unnecessary frictional resistance generated during the low-torque operation can be eliminated, and the operation of the rotary damper during the low-torque operation can be smoothly performed.

Additionally, the frictional resistance suppressing mechanism 17 is divided into two members of the first resistance suppressing body 17a and the second resistance suppressing body 17b. For this reason, it is also possible to use one end surface of the compression coil spring 15 as the second resistance suppressing body 17b. In this way, in a case where a configuration is adopted in which one end surface of the compression coil spring 15 is used as the second resistance suppressing body 17b, it is possible to reduce the number of parts.

Moreover, the second resistance suppressing body 17b is provided with three abutment parts of the first abutment part 30a against which the compression coil spring (elastic member) 15 abuts, the second abutment part 30b against which the first resistance suppressing body 17a abuts, and the third abutment part 30c against which the first torque generation member 13 abuts so that the compression coil spring (elastic member) 15 is always preliminarily compressed. Thus, in a case where the first torque generation member 13 is set to the high-load side, the preliminary compression also becomes strong. As a result, the speed dependability of the rotary damper is maintained.

Additionally, since the abutment position of the second resistance suppressing body 17b is set according to the setting position of the first torque generation member 13, and the magnitude of the preliminary compression of the compression coil spring (elastic member) 15 can be adjusted by the abutment position, so thatd the speed dependability can be further maintained by the adjustment.

In addition, when the invention is carried out, the shape of the engaging body 27 is not particularly limited to the shape illustrated in Fig. 6 in which the engaging body 27 is brought into close contact with the first cam surface 25b1 and the second cam surface 25b2 between the pair of cams 25 and 25, and may be a shape illustrated in Fig. 7. Additionally, a configuration in which the housing 11 side rotates with respect to the shaft 12 may be adopted. Additionally, the engaging body 27 may be provided on the pipe body 26 side, the cams 25 may be provided on the second torque generation member 14 side, and a relationship of attachment to both the pipe body 26 and second torque generation member 14 may be reversed. Additionally, a configuration may be adopted in which the second torque generation member 14, the cams 25, and the engaging body 27 are provided on the housing 11 side, the first torque generation member 13 is provided on the shaft 12 side, and the housing 11 is rotated with respect to the shaft 12. Additionally, the adjuster 16 may not be provided. In this case, the first torque generation member 13 is integrated with the housing body 11a. In addition, in the above description, the thrust direction and the axial direction are used as indicating the same direction.

Additionally, the invention can be variously modified without departing from the spirit of the invention, and it is obvious that the invention extends the modified ones.

### Reference Signs List

- 10:: ROTARY DAMPER
- 11:: HOUSING
- 11a:: HOUSING BODY
- 11b:: CAP
- 11c:: CENTRAL HOLE
- 11d:: INSIDE OF CHAMBER
- 11e:: RECESS
- 12:: SHAFT
- 13:: FIRST TORQUE GENERATION MEMBER
- 13a:: DISC-SHAPED PART
- 13b:: CUTOUT PART
- 14:: SECOND TORQUE GENERATION MEMBER
- 14a:: DISC-SHAPED PART
- 14b:: SPRING HOUSING RECESS
- 15:: COMPRESSION COIL SPRING (ELASTIC MEMBER)
- 16:: ADJUSTER
- 16a:: BEARING PART
- 17:: FRICTIONAL RESISTANCE SUPPRESSING MECHANISM
- 17a:: FIRST RESISTANCE SUPPRESSING BODY
- 17b:: SECOND RESISTANCE SUPPRESSING BODY
- 18:: BALL BEARING
- 19:: O-RING SEAL
- 20:: KEY
- 21:: KEY GROOVE
- 22:: COLLAR-SHAPED PART
- 22a:: RECEIVING SURFACE
- 23a, 23b:: CAM
- 24:: PROJECTION PLATE
- 24a:: FIRST TORQUE GENERATION SURFACE
- 25:: CAM
- 25a:: PERIPHERAL SURFACE PART
- 25b1:: FIRST CAM SURFACE
- 25b2:: SECOND CAM SURFACE
- 26:: PIPE BODY
- 26a:: OUTER PERIPHERAL SURFACE
- 27:: ENGAGING BODY
- 27a:: PERIPHERAL SURFACE PART
- 27b:: INNER PERIPHERAL SURFACE
- 27b1:: FIRST CAM RECEIVING SURFACE
- 27b2:: SECOND CAM RECEIVING SURFACE
- 28:: PROJECTION PLATE
- 28a:: SECOND TORQUE GENERATION SURFACE
- 29:: COLLAR-SHAPED PART
- 29a:: RECEIVING SURFACE
- 30a:: FIRST ABUTMENT PART
- 30B:: SECOND ABUTMENT PART
- 30C:: THIRD ABUTMENT PART
- 31, 32:: SEAL MEMBER
- 33:: WASHER
- 34:: SNAP RING
- S:: GAP (DISTANCE)
- G:: THRUST DIRECTION

## Claims

1. A rotary damper (10) in which a magnitude of damper torque varies automatically in accordance with a rotating speed of a rotating member;
**characterized in that**;
the rotary damper (10) comprises, inside a housing (11) filled with a viscous fluid:
a shaft (12) attached rotatably with respect to the housing (11) such that one end thereof is made to protrude to an outside of the housing (11);
a first torque generation member (13) that is provided with a first torque generation surface (24a) which spreads in an axial direction of the shaft (12) and is attached to the housing (11);
a second torque generation member (14) that is provided with a second torque generation surface (28a) capable of facing the first torque generation surface (24a) and integrally rotates with the shaft (12);
an elastic member (15) interposed between the first torque generation member (13) and the second torque generation member (14);
an adjuster (16) that adjusts, in the axial direction of the shaft (12), a position of the second torque generation member (14) with respect to the first torque generation member (13); and
a frictional resistance suppressing mechanism (17) disposed between the first torque generation member (13) and the second torque generation member (14) to suppress frictional resistance with the elastic member (15).

2. The rotary damper (10) according to Claim 1,
**characterized in that**;
the frictional resistance suppressing mechanism (17) includes at least a first resistance suppressing body (17a) and a second resistance suppressing body (17b).

3. The rotary damper (10) according to Claim 2,
**characterized in that**;
the second resistance suppressing body (17b) abuts against the first resistance suppressing body (17a) and separates from the first torque generation member (13) during low-load setting of the rotary damper, performed by the adjuster (16), and separates from the first resistance suppressing body (17a) and abuts against the first torque generation member (13) during high-load setting thereof.

4. The rotary damper (10) according to Claim 2 or 3,
**characterized in that**;
the second resistance suppressing body (17b) includes a first abutment part (30a) against which the elastic member (15) abuts, a second abutment part (30b) against which the first resistance suppressing body (17a) abuts, and a third abutment part (30) against which the first torque generation member (13) abuts, and always preliminarily compresses the elastic member (15).
